# EUROPEAN PATENT APPLICATION

(11) **EP 4 614 925 A1**
(43) Date of publication of application: **10.09.2025**
(21) Application number: 23896793.9
(22) Date of filing: 28.11.2023
(51) Int. Cl.: H04L 41/50

(54) **INSTANTIATION METHOD FOR VIRTUALIZATION NETWORK FUNCTION (VNF), AND APPARATUS**

(30) Priority: 30.11.2022 CN 202211524508
(71) Applicant: Huawei Technologies Co., Ltd., Shenzhen, Guangdong 518129 (CN)
(72) Inventor: LI, Shitao, Shenzhen, Guangdong 518129 (CN)
(74) Representative: Pfenning, Meinig & Partner mbB
(86) International application number: PCT/CN2023/134807
(87) International publication number: WO 2024/114645

(57) **Abstract**

This application relates to the field of NFV technologies, and discloses an instantiation method and apparatus for a virtualised network function VNF. The method includes: A VNFM receives a first instantiation request from an NFVO, where the first instantiation request includes configuration information of a first virtual connection point of a VNF, and the configuration information of the first virtual connection point includes configuration information of K microservices of an NF corresponding to the VNF; further determines configuration information of a first ingress container object corresponding to the first virtual connection point, where the first ingress container object configured to provide an access ingress of the K microservices; and sends the configuration information of the first ingress container object to a CISM, where the configuration information of the first ingress container object is for creating the first ingress container object. In this way, an ingress container object can be created for a microservice. Because an access address of the microservice defined by using the ingress container object may be a domain name (for example, an fqdn), an access requirement of the microservice can be met.

## Description

### CROSS-REFERENCE TO RELATED APPLICATIONS

This application claims priority to Chinese Patent Application No. 202211524508.2, filed with the China National Intellectual Property Administration on November 30, 2022 and entitled "INSTANTIATION METHOD AND APPARATUS FOR VIRTUALISED NETWORK FUNCTION VNF", which is incorporated herein by reference in its entirety.

### TECHNICAL FIELD

This application relates to the field of communication technologies, and in particular, to an instantiation method and apparatus for a virtualised network function VNF.

### BACKGROUND

A network functions virtualisation (network functions virtualisation, NFV) technology uses a general-purpose hardware device and a virtualisation technology to construct a virtualised network function (virtualisation network function, VNF), and uses the VNF to carry functions of a dedicated device on a conventional network, so as to reduce costs caused by deploying the dedicated device.

A container management platform is a containerization technology-based platform, for example, a Kubernetes (K8S for short) platform. One container management platform manages one cluster including several physical machines or virtual machines. A container object may be deployed on the physical machine or the virtual machine.

With continuous development of the containerization technology, the container management platform is introduced to an NFV architecture. In the NFV architecture into which the container management platform is introduced, there is a need to further study how to meet an access requirement of a microservice.

### SUMMARY

This application provides an instantiation method and apparatus for a VNF, to create an ingress container object for a microservice, so as to meet an access requirement of the microservice.

According to a first aspect, an embodiment of this application provides an instantiation method for a VNF. The method may be performed by a VNFM. In the method, the VNFM receives a first instantiation request from a network functions virtualisation orchestrator NFVO, where the first instantiation request is for requesting to instantiate the VNF, the first instantiation request includes configuration information of K microservices of a network function NF corresponding to the VNF, and K is a positive integer; determines configuration information of a first ingress container object based on the configuration information of the K microservices, where the first ingress container object is configured to provide an access ingress of the K microservices; and sends the configuration information of the first ingress container object to container infrastructure service management CISM, where the configuration information of the first ingress container object is for creating the first ingress container object.

Specifically, in this method, the VNFM receives a first instantiation request from an NFVO, where the first instantiation request is for requesting to instantiate the VNF, the first instantiation request includes configuration information of a first virtual connection point of the VNF, the configuration information of the first virtual connection point includes the configuration information of the K microservices of a network function NF corresponding to the VNF, and K is a positive integer; determines, based on the configuration information of the first virtual connection point, configuration information of a first ingress container object corresponding to the first virtual connection point, where the first ingress container object is configured to provide an access ingress of the K microservices; and sends the configuration information of the first ingress container object to container infrastructure service management CISM, where the configuration information of the first ingress container object is for creating the first ingress container object.

According to the foregoing method, the VNFM may determine, based on configuration information of a microservice (or configuration information of a virtual connection point that includes configuration information of a microservice) in an instantiation request sent by the NFVO, configuration information of an ingress container object configured to provide an access ingress of the microservice, to create the ingress container object for the microservice. Because an access address (for example, an fqdn) of the microservice defined by using the ingress container object belongs to layer 7, an access requirement of the microservice can be met.

In a possible design, the determining, based on the configuration information of the first virtual connection point, configuration information of a first ingress container object corresponding to the first virtual connection point includes: obtaining a virtualised network function descriptor VNFD of the VNF, where the VNFD includes mapping information, and the mapping information indicates a mapping relationship between the configuration information of the first virtual connection point and the configuration information of the first ingress container object; and determining the configuration information of the first ingress container object based on the configuration information of the first virtual connection point and the mapping information.

In a possible design, the mapping information includes first mapping information corresponding to a first microservice in the K microservices; and the first mapping information includes at least one of the following: domain name mapping information, where the domain name mapping information indicates a parameter mapped to a domain name of the first microservice in configuration information of the first microservice; or priority mapping information, where the priority mapping information indicates a parameter mapped to a priority of the first microservice in configuration information of the first microservice.

In a possible design, the VNFD includes description information of the first microservice, and the first mapping information is included in the description information of the first microservice.

In a possible design, the description information of the first microservice further includes at least one of the following:
service type information, where the service type information includes a name of the first microservice;
domain name type information, where the domain name type information indicates a configured domain name type supported by the first microservice, and the domain name type includes an internal access domain name and/or an external access domain name; or
priority information, where the priority information indicates a configured priority supported by the first microservice.

In this way, the virtual connection point is extended in the VNFD, to implement mapping between a network element microservice and the ingress container object, and parameters such as the container object type information, the service type information, the domain name type information, and the priority information are introduced into the VNFD to manage the ingress container object. Therefore, the network element microservice can be better reconstructed by using a cloud native technology, and a microservice-based network element can be created and life cycle management can be implemented through MANO.

In a possible design, the VNFD further includes container object type information corresponding to the first virtual connection point, and the container object type information indicates that a container object type corresponding to the first virtual connection point is an ingress container object.

In a possible design, the VNFD further includes description information of a virtualisation deployment unit VDU of the VNF, the description information of the VDU includes the service type information, and the service type information indicates a microservice corresponding to the VDU.

In a possible design, the method further includes: receiving an access address of the first ingress container object from the CISM.

In a possible design, the method further includes: receiving first request information from the NFVO, where the first request information is for requesting an access address of the first virtual connection point; and sending, to the NFVO based on the first request information, the access address of the first ingress container object as the access address of the first virtual connection point.

According to a second aspect, an embodiment of this application provides an instantiation method for a VNF. The method may be performed by an NFVO. In the method, the NFVO receives a second instantiation request from an operation support system/business support system OSS/BSS, where the second instantiation request is for requesting to instantiate the VNF, and the second instantiation request includes configuration information of M microservices of an NF corresponding to the VNF; obtains, based on configuration information of K microservices corresponding to a first virtual connection point of the VNF, configuration information of the first virtual connection point, where the K microservices belong to the M microservices, M and K are positive integers, and K is less than or equal to M; and sends a first instantiation request to a VNFM, where the first instantiation request includes the configuration information of the first virtual connection point, the configuration information of the first virtual connection point is for determining configuration information of a first ingress container object corresponding to the first virtual connection point, and the first ingress container object is configured to provide an access ingress of the K microservices.

In a possible design, the method further includes: obtaining a VNFD of the VNF, where the VNFD includes description information of the first virtual connection point, and the description information of the first virtual connection point indicates that the first virtual connection point corresponds to the K microservices.

In a possible design, the description information of the first virtual connection point includes names of the K microservices.

In a possible design, the method further includes: receiving second request information from the OSS/BSS, where the second request information is for requesting resource utilization information of a first microservice in the K microservices; obtaining, based on the second request information, resource utilization information of at least one VDU corresponding to the first microservice; determining the resource utilization information of the first microservice based on the resource utilization information of the VDU corresponding to the first microservice; and sending the resource utilization information of the first microservice to the OSS/BSS.

In a possible design, the method further includes: obtaining a VNFD of the VNF, where the VNFD indicates at least one VDU corresponding to the first microservice.

In a possible design, the VNFD includes description information of each of the at least one VDU, the description information of the VDU includes service type information, and the service type information indicates that a microservice corresponding to the VDU is the first microservice.

It may be understood that the method described in the second aspect corresponds to the method described in the first aspect. Therefore, for beneficial effects of related technical features in the method described in the second aspect, refer to those in the first aspect. Details are not described again.

According to a third aspect, this application provides an instantiation apparatus for a VNF. The apparatus has a function of implementing the first aspect or the second aspect. For example, the apparatus includes a corresponding module, unit, or means for performing an operation in the first aspect or the second aspect. The function, unit, or means may be implemented by using software, may be implemented by using hardware, or may be implemented by hardware executing corresponding software.

In a possible design, the apparatus includes a processing unit and a communication unit. The communication unit may be configured to receive and send a signal, to implement communication between the apparatus and another apparatus. For example, the communication unit is configured to send system information to a terminal device. The processing unit may be configured to perform some internal operations of the apparatus. Functions performed by the processing unit and the communication unit may correspond to operations in the first aspect or the second aspect.

In a possible design, the apparatus includes a processor. The processor may be configured to be coupled to a memory. The memory may store a necessary computer program or instructions for implementing functions in the first aspect or the second aspect. The processor may perform the computer program or instructions stored in the memory. When the computer program or instructions are performed, the apparatus is enabled to perform the method according to any possible design or implementation in the first aspect or second aspect.

In a possible design, the apparatus includes a processor and a memory. The memory may store a necessary computer program or instructions for implementing functions in the first aspect or the second aspect. The processor may perform the computer program or instructions stored in the memory. When the computer program or instructions are performed, the apparatus is enabled to perform the method according to any possible design or implementation in the first aspect or second aspect.

In a possible design, the apparatus includes a processor and an interface circuit. The processor is configured to communicate with another apparatus via the interface circuit and perform the method according to any possible design or implementation in the first aspect or second aspect.

It may be understood that in the third aspect, the processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fourth aspect, this application provides an instantiation system for a VNF. The system may include a VNFM and an NFVO, the VNFM is configured to perform the method in any possible design of the first aspect, and the NFVO is configured to perform the method in any possible design of the second aspect.

According to a fifth aspect, this application provides a computer-readable storage medium. The computer storage medium stores computer-readable instructions; and when a computer reads and executes the computer-readable instructions, the computer is enabled to perform the method according to any one of the possible designs of the first aspect or the second aspect.

According to a sixth aspect, this application provides a computer program product. When a computer reads and executes the computer program product, the computer is enabled to perform the method according to any one of the possible designs of the first aspect or the second aspect.

According to a seventh aspect, this application provides a chip. The chip includes a processor. The processor is coupled to a memory, and is configured to read and execute a software program stored in the memory, to implement the method according to any one of the possible designs of the first aspect or the second aspect.

### BRIEF DESCRIPTION OF DRAWINGS

FIG. 1 is a diagram of an NFV architecture according to an embodiment of this application;
FIG. 2 is a diagram of a Kubernetes container management and orchestration architecture according to an embodiment of this application;
FIG. 3 shows an NFV architecture into which a container management platform is introduced according to an embodiment of this application;
FIG. 4A is a diagram of a relationship between a service and a pod according to an embodiment of this application;
FIG. 4B is a diagram of a relationship between an ingress and a service according to an embodiment of this application;
FIG. 5 is a schematic implementation flowchart of deploying a VNF in a containerized manner according to an embodiment of this application;
FIG. 6 shows an example of a correspondence according to an embodiment of this application;
FIG. 7 is a schematic flowchart corresponding to an instantiation method for a VNF according to an embodiment of this application;
FIG. 8 is a possible example block diagram of an apparatus according to an embodiment of this application; and
FIG. 9 is a diagram of a structure of an apparatus according to an embodiment of this application.

### DESCRIPTION OF EMBODIMENTS

The following describes the technical solutions in embodiments of this application with reference to the accompanying drawings in embodiments of this application. All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In embodiments of this application, terms such as "example" and "for example" are used to represent giving an example, an illustration, or descriptions. Any embodiment or design scheme described as an "example" in this application should not be explained as being more preferred or having more advantages than another embodiment or design scheme. Exactly, the term "example" is used to present a concept in a specific manner. In embodiments of this application, "of", "corresponding (corresponding, relevant)", and "corresponding (corresponding)" are interchangeable sometimes. It should be noted that meanings expressed by the terms are consistent when differences are not emphasized.

The network architectures and the service scenario described in embodiments of this application are intended to describe the technical solutions in embodiments of this application more clearly, and do not constitute any limitation on the technical solutions provided in embodiments of this application. A person of ordinary skill in the art may know that, with evolution of the network architectures and emergence of new service scenarios, the technical solutions provided in embodiments of this application are also applicable to similar technical problems.

The following describes the network architectures provided in embodiments of this application.

### 1. NFV architecture

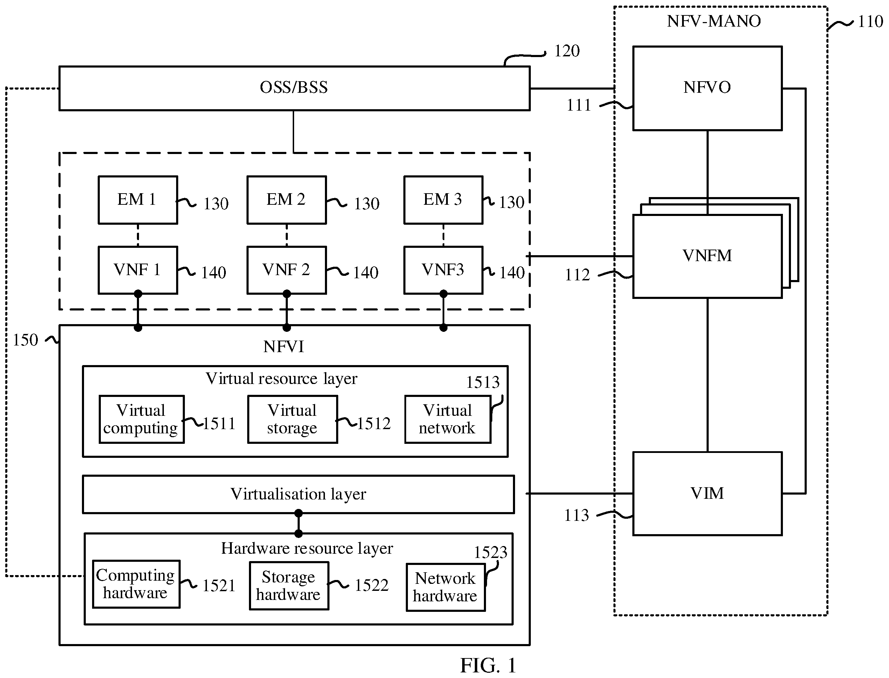

FIG. 1 is a diagram of an NFV architecture according to an embodiment of this application. As shown in FIG. 1, the NFV architecture may include an NFV management and orchestration system (NFV management and orchestration system, NFV-MANO) 110, an NFV infrastructure (NFV infrastructure, NFVI) 150, a plurality of VNFs 140, a plurality of device managements (element managements, EMs) 130, and one or more operation support systems/business support systems (operation support systems/business support systems, OSSs/BSSs) 120. The NFV-MANO 110 may include an NFV orchestrator (NFV orchestrator, NFVO) 111, one or more virtualized network function managers (virtualized network function managers, VNFMs) 112, and one or more virtualized infrastructure managers (virtualized infrastructure managers, VIMs) 113.
(1) The NFVO 111 is mainly responsible for life cycle management of a virtualized service, allocation and scheduling of a virtualized infrastructure and a virtual resource in the NFVI, and the like. The NFVO 111 may communicate with the one or more VNFMs 112, to execute a resource-related request, send configuration information to the VNFM 112, and collect status information of the VNF 140. In addition, the NFVO 111 may also communicate with the VIM 113, perform resource allocation and/or reservation, and exchange virtualized hardware resource configuration and status information.
(2) The VNFM 112 is mainly responsible for life cycle management of one or more VNFs, for example, instantiating (instantiating) the VNF 140, updating (updating) the VNF 140, querying the VNF 140, scaling (scaling) the VNF 140, and terminating (terminating) the VNF 140. The VNFM 112 may communicate with the VNF 140 to complete VNF life cycle management and exchange of configuration and status information. In the NFV architecture, there may be a plurality of VNFMs, responsible for performing life cycle management on different types of VNFs.
(3) The VIM 113 is mainly responsible for controlling and managing interaction between the VNF 140 and computing hardware 1521, storage hardware 1522, network hardware 1523, virtual computing 1511 (for example, a virtual machine (virtual machine, VM)), a virtual storage 1512, and a virtual network 1513. For example, the VIM 113 performs a resource management function, including a function of managing an infrastructure resource, an allocation function (for example, adding a resource to a virtual container), and a running function (for example, collecting NFVI fault information). The VNFM 112 may communicate with the VIM 113, to request resource allocation and exchange of virtualized hardware resource configuration and status information.
(4) The NFVI 150 may include a hardware resource layer including the computing hardware 1521, the storage hardware 1522, and the network hardware 1523, a virtualisation layer, and a virtual resource layer including the virtual computing 1511, the virtual storage 1512, and the virtual network 1513. The computing hardware 1521 in the hardware resource layer may be a dedicated processor or a general purpose processor such as a central processing unit (central process unit, CPU) configured to provide processing and computing functions. The storage hardware 1522 such as a magnetic disk or network attached storage (network attached storage, NAS) is configured to provide a storage capability. The network hardware 1523 may be a switch, a router, and/or another network device. The virtualisation layer in the NFVI 150 is configured to abstract hardware resources at the hardware resource layer to decouple the VNF 140 from a physical layer to which the hardware resources belong, to provide virtual resources to the VNF. The virtual resource layer may include the virtual computing 1511, the virtual storage 1512, and the virtual network 1513. The virtual computing 1511 and the virtual storage 1512 may be provided to the VNF 140 in a form of a virtual machine or another virtual container. For example, one or more virtual machines form a VNF 140. The virtualisation layer forms the virtual network 1513 by abstracting the network hardware 1523. The virtual network 1513 is configured to implement communication between a plurality of virtual machines or a plurality of virtual containers of another type that carry the VNF.
(5) The EM 130 is a system for configuring and managing a device in a conventional telecommunication system. In the NFV architecture, the EM 130 is a system for configuring and managing the VNF, and initiating a life cycle management operation on the VNFM 112, for example, instantiating a new VNF)
(6) The OSS/BSS 120 supports various end-to-end telecommunication services. For example, management functions supported by the OSS include: network configuration, service provision, fault management, and the like; and the BSS processes orders, payment, revenue, and the like, and supports product management, order management, revenue management, and customer management.
(7) The VNF 140 corresponds to a physical network function (physical network function, PNF) in a conventional non-virtualized network, for example, a virtualized core network node (for example, an access and mobility management function (access and mobility management function, AMF) network element or a session management function (session management function, SMF) network element). Functional behavior and a status of a network function are unrelated to whether the network function is virtualized. NFV technical requirements expect that the VNF has same functional behavior and external interfaces as the PNF.

### 2. Container as a service architecture

In a telecommunication network, another virtualisation technology, that is, a container as a service (container as a service, CaaS) technology, is usually used. A CaaS is a specific type of platform as a service (platform as a service, PaaS). The container as a service architecture is introduced into a cloudification process of a telecommunication network function, bringing agile transformation to development and operations (DevOps) of the telecommunication industry. A corresponding change is that conventional large-granularity monolithic network functions are gradually deconstructed and service-based, and even further microservice-based. Each service-based function can be independently developed, delivered, and maintained, and version upgrade becomes more frequent. However, a sharp increase in a quantity of containerized network functions does not bring an exponential increase in an interoperability test workload. A definition of a stable application programming interface (application programming interface, API) ensures consistency and reliability of interface function invoking. The CaaS technology has no virtual hardware or operating system, but only processes. Therefore, compared with the NFV technology, the CaaS technology is more lightweight and easier to manage.

Currently, a popular application in the container management and orchestration field is a Kubernetes container cluster management technology of Google (Google) based on an open-source platform. A Kubernetes platform manages a cluster that includes a plurality of physical machine resources or virtual machine resources. If the physical machine resources are managed, Kubernetes directly deploys a created container on the physical machine. If the virtual machine resources are managed, Kubernetes deploys a created container on the virtual machine. Helm is a package manager of K8S and is mainly responsible for managing a deployment package (also referred to as Helm chart) for deploying an application. A yet another markup language (yet another markup language, YAML) file of a K8S native application may be encapsulated in a Helm chart. Helm may be included in K8S or an independent package management tool. In this embodiment of this application, an example in which Helm is included in K8S is used.

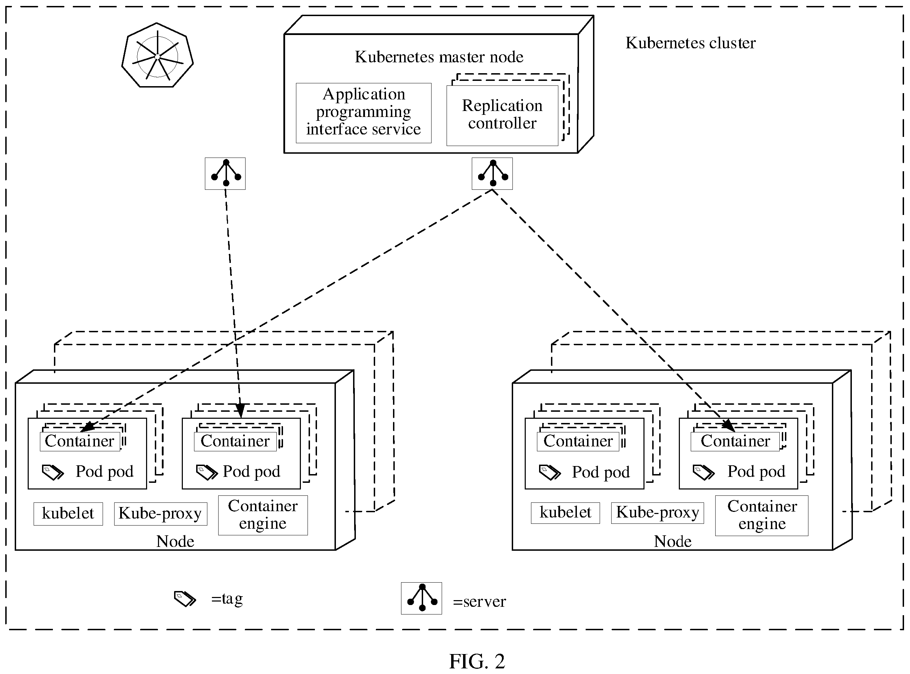

FIG. 2 is a diagram of a Kubernetes container management and orchestration architecture. As shown in FIG. 2, Kubernetes divides devices in a cluster into a Kubernetes master (master) node and a group of worker nodes (nodes). A group of processes, for example, an application programming interface server (application programming interface server, API server) and a replication controller (replication controller, RC) related to cluster management are run on the master node. These processes implement management functions such as resource management, pod (pod) scheduling, scaling, security control, system monitoring, and error correction of the entire cluster. Three components, that are, kubelet, kube-proxy, and a container engine, run on each node to manage a life cycle of a pod on the node and implement a service proxy function. A pod is a basic scheduling unit in Kubernetes.

The API server provides a unique operation ingress for a resource object and all other components need to operate resource data through an API interface provided by the API server, to implement a related service function by performing "full query" and "change monitoring" on related resource data.

A controller manager is a management and control center of a cluster. The controller manager is mainly for implementing automatic fault detection and recovery of a kubernetes cluster. For example, the pod may be replicated or removed based on a definition of the RC to ensure that a quantity of pod instances complies with the definition of the RC. Based on a management relationship between a service (service) and the pod, service endpoint (endpoints) object creation and update, node discovery, management, status monitoring, locally cached container image file deletion, and the like are completed.

The kubelet component is responsible for full life cycle management, such as creation, modification, monitoring, and deletion, of the pod on the node. In addition, kubelet periodically reports status information of the node to the API server.

The proxy component is configured to implement service proxy and load balancing in a software mode.

A docker component is an operating environment of a container.

### 3. Combination of an NFV technology and a CaaS technology

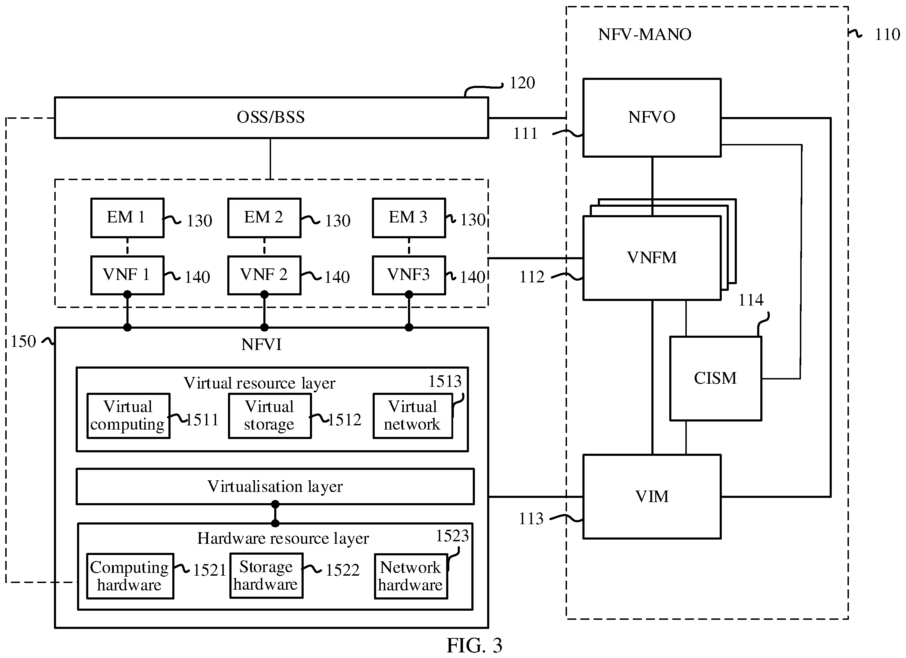

With continuous development of the NFV technology, it is proposed that the CaaS technology and the NFV technology be combined, to form a scenario in which an NFV MANO system and a container management and orchestration system are interoperable. FIG. 3 shows an example of an NFV architecture into which a container management platform is introduced.

In FIG. 3, container infrastructure service management (container infrastructure service management, CISM) 114 is added to NFV MANO. The CISM is a container management platform in an NFV architecture, and is responsible for managing a container object invoked by a VNF, including creation, update, deletion, and the like of the container object. When the VNF is deployed in a form of a container, the CISM 114 may create a container object based on a request of a VNFM 112.

In embodiments of this application, an example in which the CISM is kubernetes is used for description. In addition, in FIG. 3, for a network element other than the CISM, refer to the descriptions in FIG. 1. Details are not described again.

The network elements (such as the NFVO, the VNFM, and the CISM) described in FIG. 1 to FIG. 3 are merely examples but not limitations. In a standard evolution process, names of the foregoing network elements may change, and functions performed by the network elements may be further split or combined. This is not limited in embodiments of this application.

It should be noted that in embodiments of this application, "a plurality of" means two or more. In view of this, in embodiments of this application, "a plurality of" may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship between associated objects and indicates that three relationships may exist. For example, A and/or B may indicate the following three cases: Only A exists, both A and B exist, and only B exists. In addition, unless otherwise specified, the character "/" generally indicates an "or" relationship between the associated objects. The terms "system" and "network" may be used interchangeably in embodiments of this application.

Unless otherwise specified, ordinal numbers such as "first" and "second" in embodiments of this application are used to distinguish between a plurality of obj ects, and are not intended to limit a sequence, a time sequence, priorities, or importance of the plurality of objects.

The following explains and describes related technical features in embodiments of this application. It should be noted that these explanations are intended to make embodiments of this application easier to understand, but should not be considered as a limitation on the protection scope claimed in this application.

### (1) Container object

Kubernetes may create a plurality of types of container objects, such as a pod container object, a service container object, and an ingress (ingress) container object. A corresponding concept of the container object in a European Telecommunications Standards Institute (European Telecommunications Standards Institute, ETSI) NFV standard is a managed container infrastructure object (managed container infrastructure object, MCIO).

Pod container object: A pod is a minimum unit for creating a container in a cluster managed by Kubernetes. One pod may include one or more containers. Therefore, the pod may also be referred to as a container compartment. The pods of Kubernetes have life cycles, and may be created or destroyed. When the pods are destroyed, the life cycles of the pods end permanently. Kubernetes may dynamically create and destroy the pod (for example, perform scaling or rolling upgrade based on a requirement) based on a resource association.

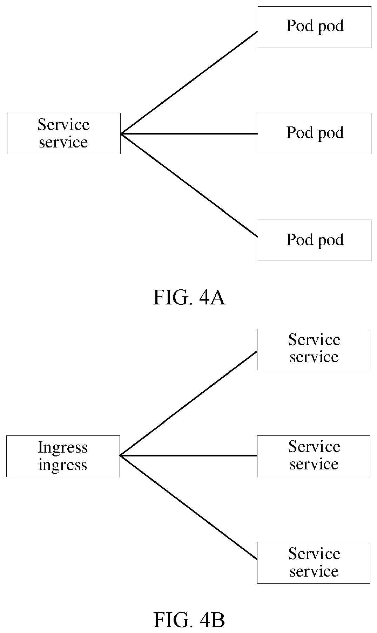

Service container object: A service is a core concept of Kubernetes. A plurality of pods can be accessed by a same service. The service selects an associated pod based on a tag. Even if the pod changes, a corresponding application (another pod or a newly created pod) can be accessed by accessing the service. FIG. 4A is a diagram of a relationship between a service and a pod.

In addition, the service may provide a load balancing capability, for example, route, based on current load of the associated pod, a service accessing request to an appropriate pod for processing. The service is represented in a form of IP:Port (Port). To be specific, the service works at a TCP/IP layer, in other words, the service may provide a layer 4 load balancing capability. For example, Table 1 shows a definition of a service.

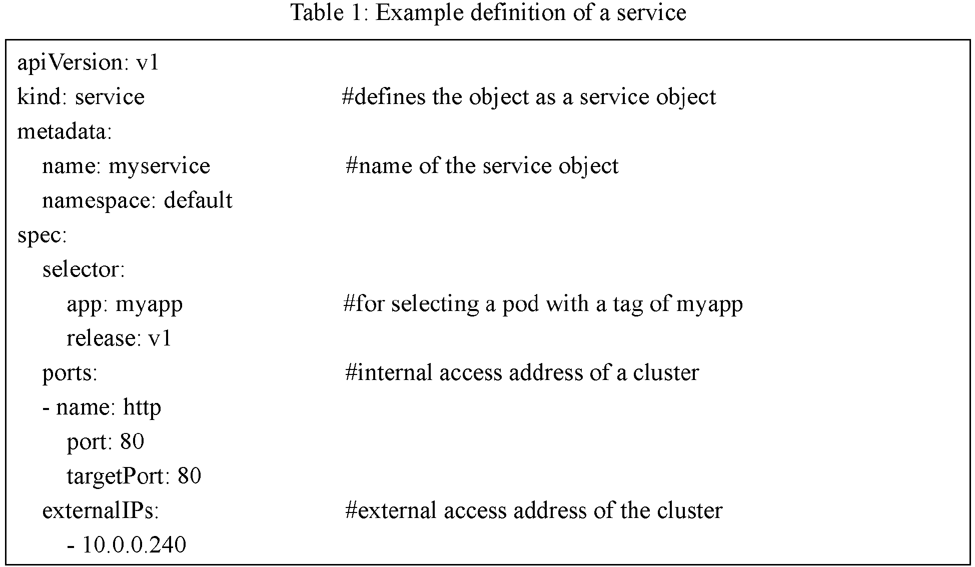

Ingress container object: An ingress is a higher-level abstraction of a service. The service works at the TCP/IP layer. For a hypertext transfer protocol (hypertext transfer protocol, HTTP)-based service, different uniform resource locator (uniform resource locator, URL) addresses often correspond to different backend services or virtual servers. These application-layer forwarding mechanisms cannot be implemented only using a Kubernetes service mechanism. In Kubernetes version V1.1, the ingress is added to forward access requests of different URLs to different backend services, implementing a service routing mechanism at an HTTP layer. FIG. 4B is a diagram of a relationship between an ingress and a service.

For example, different rules may be defined in the ingress to associate a plurality of services. For example, Table 2 shows definitions of a rule in one ingress.

**Table 2: Example definition of a rule in an ingress**

| |
|---|
| rules: #rules |
| - host: service1.myNetwork.com #service-1 access address |
| http: |
| paths: |
| - path: / |
| backend: |
| serviceName: service-1 #associated with a service-1 |
| - host: service2.myNetwork.com #service-2 access address |
| http: |
| paths: |
| - path: / |
| backend: |
| serviceName: service-2 #associated with a service-2 |
| - host: service3.myNetwork.com #service-3 access address |
| http: |
| paths: |
| - path: / |
| backend: |
| serviceName: service-3 #associated with a service-3 |

In this way, an access party can access different services by accessing access addresses of different services. The access addresses (that is, host values) of the services defined based on the ingress rules, that is, a fully qualified domain name (fully qualified domain name, fqdn) address, belong to layer 7. In a process of implementing the ingress, after an ingress is successfully created, an internet protocol (internet protocol, IP) address assigned to the ingress and an fqdn defined in the rules may be configured in a domain name system (domain name system, DNS) server for external access. After obtaining an access address of a service (that is, an access address of a service defined in a host), a visitor queries a DNS server for an IP address corresponding to the access address, and the DNS server returns the IP address assigned to the ingress to the visitor. Then, the visitor sends an HTTP request to the IP address and specifies the access address of the accessed service in a host header to access the service.

It may be understood that the three container objects described in embodiments of this application are merely examples, and the three container objects may also have other possible names. For example, with evolution of a standard protocol, the ingress container object may have another name. This is not limited in embodiments of this application.

### (2) VNF deployment template

A virtualized network service in NFV is referred to as a network service (network service, NS), for example, an IP multimedia subsystem (IP multimedia subsystem, IMS) network, or a 5th generation (the 5th generation, 5G) core network. One NS may include several VNFs.

When an NS is deployed in a virtualized manner, a service requester first needs to submit, to a service provider, description information of the NS, which is referred to as a network service descriptor (network service descriptor, NSD) or an NS deployment template. The NSD includes a topology structure of the NS and description information of each VNF included in the NS, which is referred to as a VNF descriptor (VNF descriptor, VNFD) or a VNF deployment template. Topology structure information may include virtual link information (for example, a network service virtual link descriptor (network service virtual link descriptor, NsVld)), and the virtual link information may be for describing a connection between VNFs, for example, describing information such as a connection type and a bandwidth.

The VNFD is for providing description information of the VNF, and the VNFD may include a virtualisation deployment unit (virtualisation deployment unit connection point, VDU), a connection point descriptor (connection point descriptor, CPD), a virtual link descriptor (virtual link descriptor, VLD), and the like. For a container implementation, the VNFD may further include a reference to a managed container infrastructure object package (managed container infrastructure object package, MCIOP). For example, the MCIOP may be a Helm chart used by Kubernetes.

VDU: For a virtual machine implementation, one VDU represents one virtual machine, and description information of the VDU may include a resource requirement of the virtual machine, for example, a resource type required for creating the virtual machine and a quantity of resources of each resource type. For a container implementation, one VDU represents one group of containers. Description information of the VDU may include a resource requirement of the group of containers, and indicates resource information required for deploying the group of containers. Containers in the group of containers have a same resource requirement, and share same network information.

CPD: The CPD may include description information of an external connection point of the VNF, and the external connection point may be, for example, a virtual connection point (virtual connection point, virtual Cp).

VLD: The VLD may describe a virtual network connection requirement between VDUs, for example, a connection type and/or a bandwidth, or other information.

### (3) Microservice

A 5G communication system is used as an example. A plurality of network elements, for example, an AMF network element and an SMF network element, are defined in a core network architecture of the 5G communication system. One network element may be understood as one network function (network function, NF). Further, a plurality of microservices are further defined in each network element. For example, microservices defined in the AMF network element are shown in Table 3.

**Table 3: Example microservices defined in an AMF network element**

| Microservice name | Meaning |
|---|---|
| namf communication | Provides a service for communication with a terminal or a wireless base station. |
| namf_eventexposure | Provides a service of information related to terminal mobility. |
| namf mt | Provides a service of terminal connection reachability. |
| namf location | Provides a service of terminal location information. |
| namf MBSBroadcast | Provides a service for broadcast communication with the wireless base station. |
| namf MBScommunication | Provides a service for multicast communication with the wireless base station. |

Each microservice may be accessed and invoked by another network element or microservice by defining a corresponding domain name (for example, an fqdn). Domain names in embodiments of this application may be classified into two types: an internal access domain name and an external access domain name. When a microservice supports both internal access and external access, the microservice may include an internal access domain name and an external access domain name. For example, for namf_location, an internal access domain name of namf_location may be myAMF_locati on.mynetwork.com, and an external access domain name may be myAMF _location_external.mynetwork.com.

The introduction of microservitization to network elements can make microservices independent, and different microservices can be deployed, upgraded, and scaled independently without affecting other microservices in a network element. This provides facilitation in use and makes upgrade more agile.

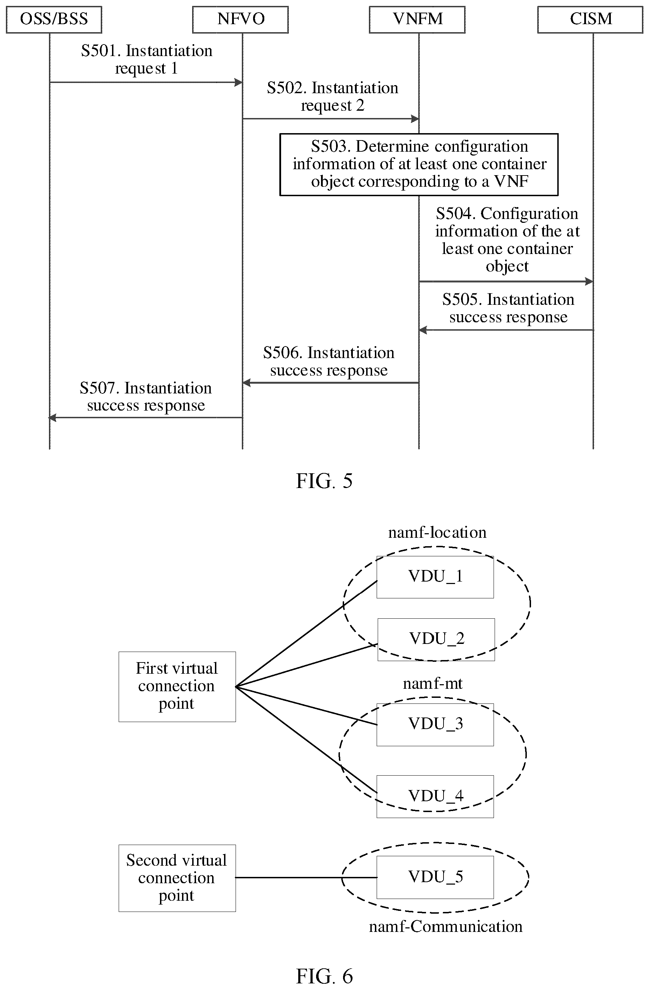

Based on the descriptions of the foregoing content, the container management platform is introduced into the NFV architecture, to deploy the VNF in a containerized manner (that is, instantiate the VNF). The following describes a possible implementation procedure with reference to FIG. 5.

FIG. 5 is a schematic implementation flowchart of deploying a VNF in a containerized manner. As shown in FIG. 5, the procedure may include the following steps.

S501. An OSS/BSS sends an instantiation request 1 to an NFVO, where the instantiation request 1 is for requesting to instantiate a VNF.

For example, the instantiation request 1 may include information about a VNFD of the VNF that needs to be instantiated, for example, an identifier (namely, VnfdId) of the VNFD.

S502. The NFVO sends an instantiation request 2 to a VNFM based on the instantiation request 1, where the instantiation request 2 is for requesting to instantiate the VNF.

For example, the instantiation request 2 may include the information about the VNFD of the VNF that needs to be instantiated, for example, the identifier (namely, VnfdId) of the VNFD.

S503. The VNFM obtains a VNFD file (or a VNFD file package) of the VNF based on the instantiation request 2, and determines, based on the VNFD file, configuration information of at least one container object corresponding to the VNF.

Herein, the VNFM may obtain the VNFD file of the VNF in a plurality of manners. In a possible implementation, after receiving the instantiation request 2, the VNFM may send a VNFD request to the NFVO. The VNFD request is for requesting to obtain the VNFD file. For example, the VNFD request includes an identifier of the VNFD file. Correspondingly, the NFVO receives the VNFD request from the VNFM. The NFVO determines the VNFD file corresponding to the identifier of the VNFD file, and sends the VNFD file to the VNFM.

For example, the VNFD file package may include the VNFD file and an MCIOP, and may further include other possible files. This is not specifically limited. The VNFD file in embodiments of this application may also be referred to as a VNFD for short. Table 4 shows an example of the VNFD file package.

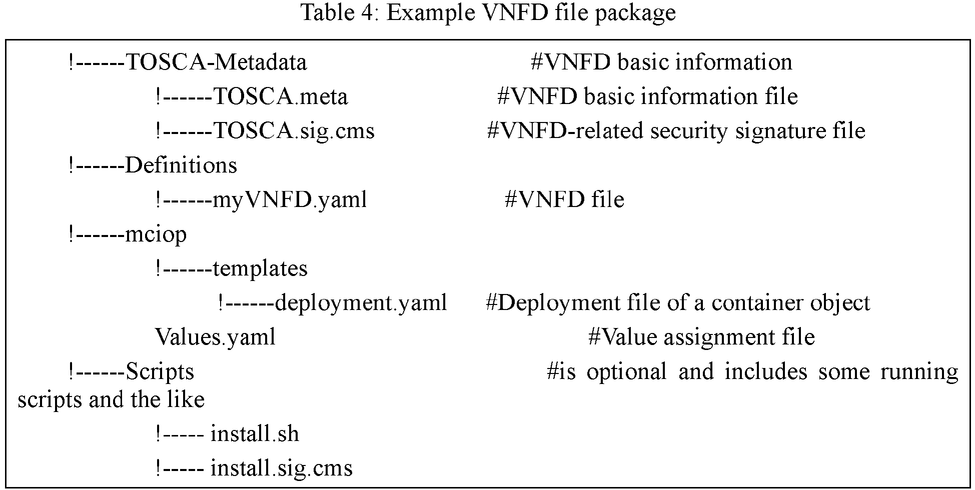

The myVNFD.yaml file may include description information of at least one VDU. A VDU_1 is used as an example, and description information of the VDU_1 is shown in Table 5.

**Table 5: Example description information of a VDU_1**

| |
|---|
| VDU_1: |
| type: tosca.nodes.nfv.Vdu.OsContainerDeployableUnit |
| properties: |
| name: "db" |
| description: "Advanced Software Database" |
| vdu_profile: |
| min_number_of_instances: 2 |
| max_number_of_instances: 10 |
| VDU_mapping: |
| Vdu_1: |
| params_mapping: |
| min_number_of_instances: |
| helm_chart_mapping: "mciop:podDB.minReplicas" |
| max_number_of_instances: |
| helm_chart_mapping: "mciop:podDB.maxReplicas" |

VDU _mapping describes a mapping relationship between configuration information of the VDU_1 and a parameter in the MCIOP.

The MCIOP may include a parameter (a values.yaml file) of a pod corresponding to the VDU. The values.yaml file is shown in Table 6.

**Table 6: Example values.yaml file**

| |
|---|
| podDB: |
| maxReplicas: 4 (default value) |
| minReplicas: 1 (default value) |

The VNFM may update values of corresponding parameters in the values.yaml file based on a correspondence in VDU _mapping. To be specific, a value of min_number_of_instances is used to update a value of minReplicas of the podDB, and a value of max_number_of_instances is used to update a value of maxReplicas of the podDB. Table 7 shows an updated values.yaml file.

**Table 7: Example updated values.yaml file**

| |
|---|
| podDB: |
| maxReplicas: 10 |
| minReplicas: 2 |

It may be understood that content included in the updated values.yaml file in Table 7 may be understood as configuration information of a pod corresponding to the VDU_1. The above is described by using an example of determining the configuration information of the pod corresponding to the VDU_1. The VNF may include a plurality of VDUs. For a manner in which the VNFM determines configuration information of a pod corresponding to another VDU, refer to the foregoing implementation.

S504. The VNFM sends the configuration information of the at least one container object to CISM. Correspondingly, the CISM receives the configuration information of the at least one container object.

Herein, the VNFM may send an updated MCIOP to the CISM. The updated MCIOP includes the configuration information of the at least one container object. For example, the updated MCIOP includes the configuration information of the pod corresponding to the VDU_1, and further includes the configuration information of the pod corresponding to the another VDU.

S505. The CISM creates at least one container object based on the configuration information of the at least one container object, and sends an instantiation success response to the VNFM.

S506. The VNFM sends the instantiation success response to the NFVO.

S507. The NFVO sends the instantiation success response to the OSS/BSS.

It can be learned from the above that the MCIOP is introduced into the VNFD of the VNF, so that the VNF can be deployed in a containerized manner. After a microservice is defined in a network element, in a possible manner, the microservice is deployed in a containerized manner by using a service in Kubernetes. Specifically, in an ETSI NFV standard, a concept of a service is introduced into a VNFD, virtualCp in the VNFD is for describing the service, and a VDU represents a pod. For example, currently, parameters defined in virtualCp are shown in Table 8.

**Table 8: Example parameters defined in virtualCp**

| Attribute (Attribute) | Qualifier (Qualifier) | Cardinality (Cardinality) | Content (Content) |
|---|---|---|---|
| portData | M | 1..N | servicePortData |
| serviceData | M | 0..1 | Not specified |

ServicePortData includes a parameter for describing a service, for example, a port. For details, refer to the ETSI NFV standard. Details are not described again.

However, the service provides only a layer 4 (TCP/IP) load balancing capability, but does not provide a layer 7 capability (for example, forwarding based on an application layer protocol, such as HTTP-based forwarding, may be performed based on a domain name, a URL, or the like). Therefore, the service cannot be accessed by defining an fqdn. However, the microservice is accessed by another network element or microservice by defining the fqdn. Therefore, when the microservice is deployed in a containerized manner by using the service in Kubernetes, an access requirement of the microservice cannot be met.

In view of this, an embodiment of this application provides an instantiation method for a VNF. A network element microservice is deployed by using an ingress container object (namely, an ingress). Because an access address of a service defined by using the ingress belongs to layer 7 (with reference to the foregoing descriptions about the ingress), an access requirement of the microservice can be met.

The technical solutions provided in embodiments of this application are described below in detail with reference to the accompanying drawings.

For example, in the method provided in embodiments of this application, a VNFD may be improved. For example, a new parameter may be defined in virtualCP of the VNFD, to implement mapping between the microservice and the ingress, so that the network element microservice is deployed by using the ingress.

The following describes a specific implementation of improving the VNFD with reference to a specific example.

For example, the VNF includes two virtual connection points. The two virtual connection points are classified into a first virtual connection point (represented as virtualCp1) and a second virtual connection point (represented as virtualCp2). The VNFD may include description information of the first virtual connection point and description information of the second virtual connection point. The first virtual connection point is used as an example. The description information of the first virtual connection point may include container object type (mcio_type) information, the container object type information indicates a container object type corresponding to the first virtual connection point, and the container object type may be an ingress type or a service type, or may be another possible container type. In this embodiment of this application, an example in which the container object type corresponding to the first virtual connection point is the ingress type is used for description.

Further, the description information of the first virtual connection point further includes description information of K microservices. In other words, the first virtual connection point corresponds to the K microservices. For example, the K microservices include a first microservice. The first microservice is used as an example. Description information of the first microservice includes at least one of the following:
1. service type (service_type) information, where the service type information may include a name of the first microservice;
2. domain name type (host_type) information, where the domain name type information indicates a configured domain name type supported by the first microservice, and the domain name type includes an internal (internal) access domain name and/or an external (external) access domain name;
3. domain name mapping (mapping) information, where the domain name mapping information indicates a parameter mapped to a domain name of the first microservice;
4. priority (priority) information, where the priority information indicates a configured priority supported by the first microservice; or
5. priority mapping information, where the priority mapping information indicates a parameter mapped to a priority of the first microservice.

Based on the foregoing descriptions, the following describes the description information of the first virtual connection point and the second virtual connection point with reference to Table 9.

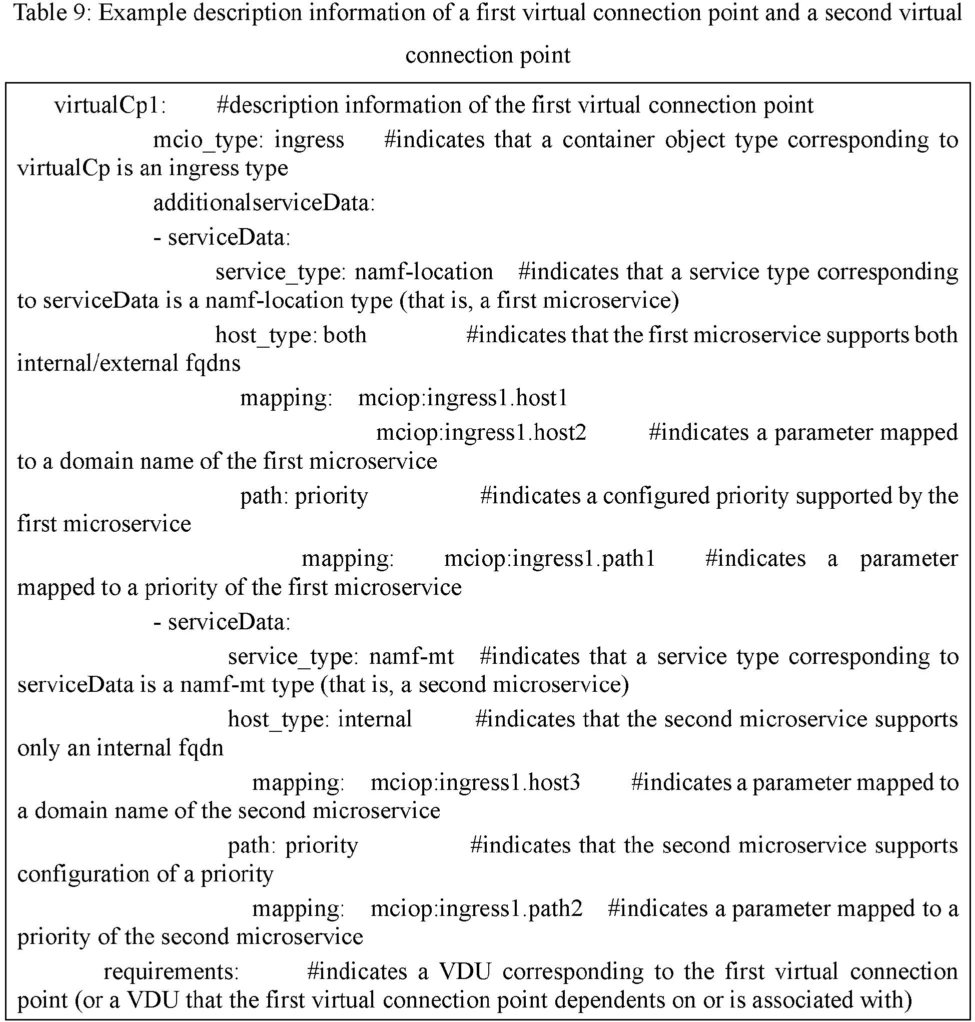

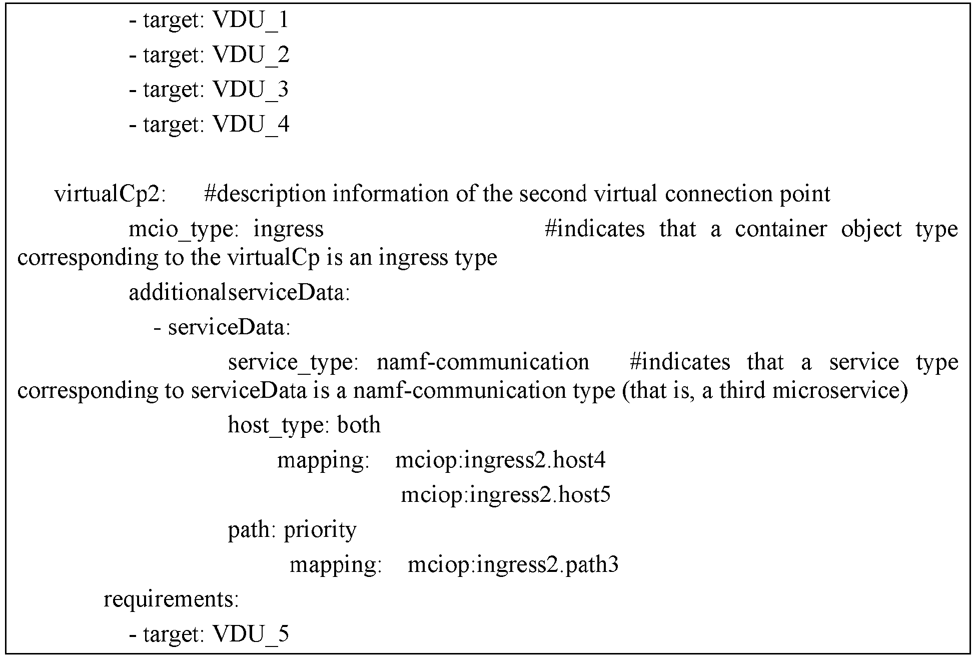

Further, for a VDU in the VNFD, as described above, one virtual connection point may correspond to a plurality of microservices and a plurality of VDUs. To establish an association between the microservice and the VDU, in this embodiment of this application, service type information may be added to the VDU, and the service type information indicates the microservice corresponding to the VDU. The following describes the VDU_1 to the VDU_5 in Table 9 with reference to Table 10.

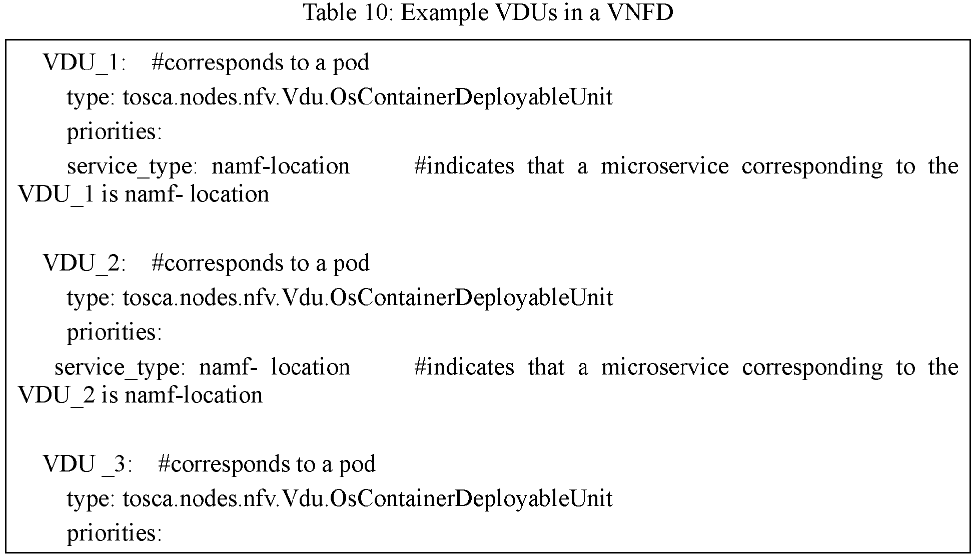

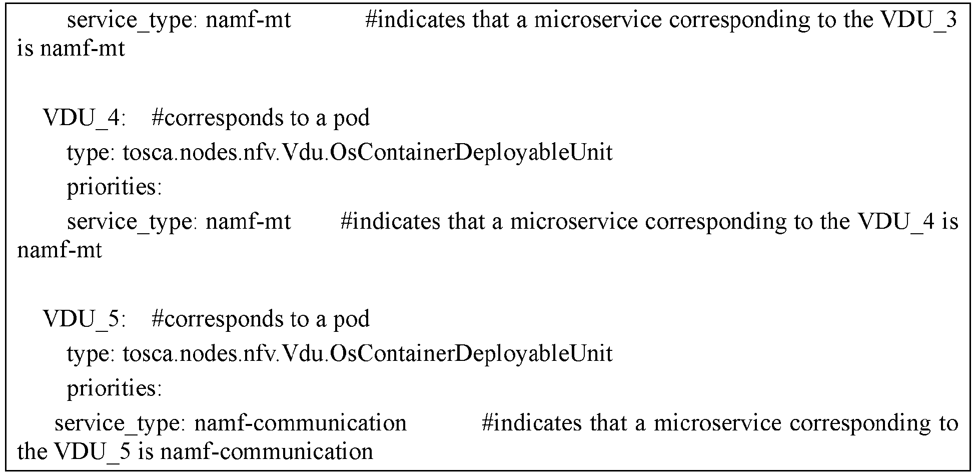

The correspondences described in Table 9 and Table 10 are shown in FIG. 6.

It may be understood that the above mainly describes the virtualCp and the VDU in the VNFD, and Table 9 and Table 10 are merely possible examples. In addition, the VNFD may further include other possible information. For details, refer to conventional technologies. Details are not described herein again.

The following describes an instantiation procedure of a VNF provided in an embodiment of this application. A VNFD in the procedure may be the foregoing improved VNFD.

In the following description process, an example in which the method is applied to the NFV architecture shown in FIG. 3 is used. In other words, the following OSS/BSS may be the OSS/BSS 120 shown in FIG. 3, the following NFVO may be the NFVO 111 shown in FIG. 3, the following VNFM may be the VIM 112 shown in FIG. 3, and the following CISM may be the CISM 114 shown in FIG. 3.

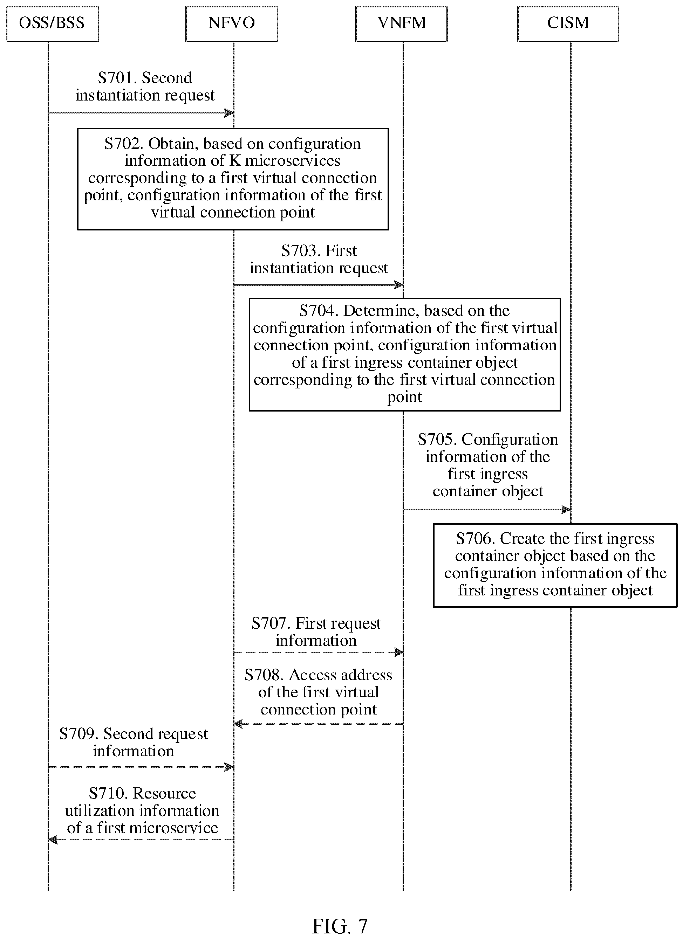

FIG. 7 is a schematic flowchart corresponding to an instantiation method for a VNF according to an embodiment of this application. As shown in FIG. 7, the method includes the following steps.

**S701.** An OSS/BSS sends a second instantiation request to an NFVO, where the second instantiation request is for requesting to instantiate the VNF, and the second instantiation request includes configuration information of M microservices of an NF corresponding to the VNF. Correspondingly, the NFVO receives the second instantiation request.

For example, the M microservices include a first microservice, and configuration information of the first microservice may include at least one of the following: a name (serviceName) of the first microservice, a domain name of the first microservice, or a priority of the first microservice, where M is a positive integer. The domain name of the first microservice may include an internal access domain name (represented as an fqdn) and an external access domain name (represented as interPlmnFqdn). For example, the M microservices include namf-location, namf-mt, and namf-communication (in other words, M=3). For the M microservices, refer to Table 11.

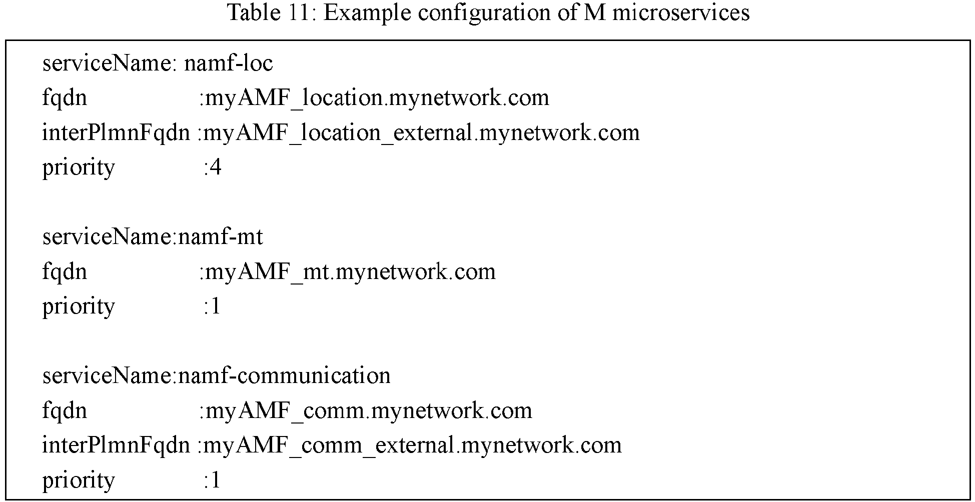

Optionally, the second instantiation request may further include other possible information, for example, may include an identifier of a VNFD of the VNF.

It may be understood that the second instantiation request is for requesting to instantiate the VNF. In specific implementations, a plurality of possible requests may be used. For example, the second instantiation request may be an NS instantiating request or an NS updating request. This is not limited in this embodiment of this application.

**S702.** The NFVO obtains, based on configuration information of K microservices corresponding to a first virtual connection point of the VNF, configuration information of the first virtual connection point.

Herein, the K microservices belong to the M microservices. To be specific, the K microservices are some or all of the M microservices, where K is a positive integer, and K is less than or equal to M.

For example, the NFVO may first determine microservices in the M microservices that correspond to the first virtual connection point, and then after determining that the first virtual connection point corresponds to the K microservices, obtain the configuration information of the first virtual connection point based on the configuration information of the K microservices. There may be a plurality of specific implementations in which the NFVO determines the microservice corresponding to the first virtual connection point. For example, the NFVO may obtain the VNFD of the VNF. The VNFD includes the description information (as shown in Table 9 above) of the first virtual connection point, and the description information of the first virtual connection point indicates that the first virtual connection point corresponds to the K microservices. For example, the description information of the first virtual connection point includes names (that is, service_type) of K microservices.

It may be understood that the NFVO may further determine configuration information of another virtual connection point (for example, a second virtual connection point) of the VNF. In the VNF, the first virtual connection point corresponds to namf-location and namf-mt, and the second virtual connection point corresponds to namf-communication. Configuration information of the first virtual connection point and the second virtual connection point is shown in Table 12.

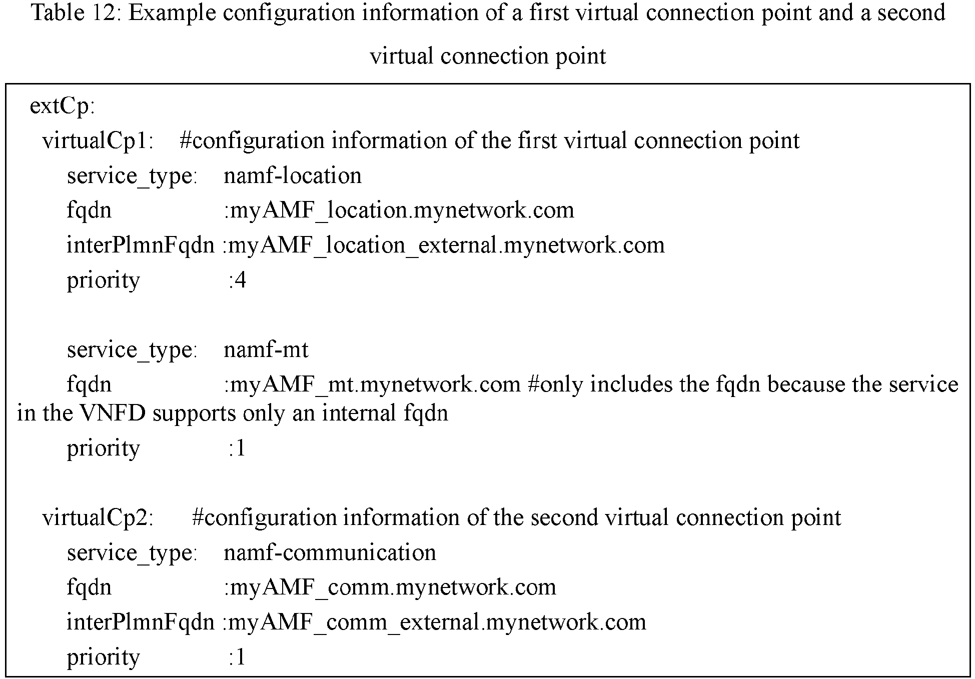

S703. The NFVO sends a first instantiation request to a VNFM, where the first instantiation request includes the configuration information of the first virtual connection point of the VNF. Correspondingly, the VNFM receives the first instantiation request.

Herein, the first instantiation request includes the configuration information of the first virtual connection point of the VNF, and the first instantiation request may further include configuration information of another virtual connection point (for example, the second virtual connection point) of the VNF.

For example, the first instantiation request may include an extVirtualLink parameter (that is, an information element), and the NFVO may add the configuration information of the first virtual connection point and the second virtual connection point to the extVirtualLink parameter. The extVirtualLink parameter is for describing information about a network to which the VNF is externally connected, and extVirtualLink includes configuration information of (one or more) external connection points (that is, extCp) of the VNF. In this embodiment of this application, virtualCp1 and virtualCp2 are used as extCp to provide connection information externally. Therefore, the configuration information of the first virtual connection point and the second virtual connection point may be added to extCp, as shown in Table 12.

Optionally, the first instantiation request may further include other possible information, for example, may include the identifier of the VNFD of the VNF.

**S704.** The VNFM determines, based on the configuration information of the first virtual connection point, configuration information of a first ingress container object corresponding to the first virtual connection point, where the first ingress container object is configured to provide an access ingress of the K microservices.

For example, the VNFM may obtain the VNFD of the VNF, where the VNFD includes mapping information, and the mapping information indicates a mapping relationship between the configuration information of the first virtual connection point and the configuration information of the first ingress container object. Further, the VNFM determines the configuration information of the first ingress container object based on the configuration information of the first virtual connection point and the mapping information. There may be a plurality of specific implementations in which the VNFM obtains the VNFD of the VNF. For example, refer to the descriptions in S503. Details are not described again.

It may be understood that the mapping information is for mapping information about a virtual connection point in the VNFD to information (that is, configuration information of an ingress container object) that can be parsed by CISM. In a possible implementation, the mapping information may include 1^{st} to K^{th} pieces of mapping information that respectively correspond to the K microservices. First mapping information corresponding to the first microservice is used as an example. The first mapping information may include at least one of the following: domain name mapping information or priority mapping information.
1. The domain name mapping information indicates a parameter mapped to a domain name of the first microservice that is included in the configuration information of the first microservice.

For example, refer to Table 9. The domain name mapping information may be mciop:ingress1.host1 and mciop:ingress1.host2. To be specific, a parameter mapped to the internal access domain name of the first microservice is mciop:ingress1.host1, and a parameter mapped to the external access domain name of the first microservice is mciop:ingress1.host2.

2. The priority mapping information indicates a parameter mapped to a priority of the first microservice that is included in the configuration information of the first microservice.

For example, refer to Table 9. The priority mapping information may be mciop:ingress1.path1. In other words, the parameter mapped to the priority of the first microservice is mciop:ingress1.path1.

In an example, the VNFD includes the description information of the first virtual connection point, the description information of the first virtual connection point includes description information of the first microservice, and the first mapping information may be included in the description information of the first microservice.

Optionally, the description information of the first virtual connection point further includes container object type information, and the container object type information indicates that a container object type corresponding to the first virtual connection point is an ingress type.

Optionally, the description information of the first microservice further includes at least one of the following: service type information (including a name of the first microservice), domain name type information (indicating that the first microservice supports configuration of a domain name type), or priority information (indicating a configured priority supported by the first microservice).

It may be understood that when the domain name type information indicates that the domain name type that can be configured by the first microservice includes the internal access domain name and the external access domain name, the VNFM may map the internal access domain name and the external access domain name to corresponding parameters based on the domain name mapping information. When the domain name type information indicates that the domain name type that can be configured by the first microservice includes only the internal access domain name (when the configuration information of the first microservice includes the internal access domain name and the external access domain name), the VNFM may select the internal access domain name from the configuration information of the first microservice based on the domain name type information, and then map the internal access domain name to a corresponding parameter based on the domain name mapping information.

For example, the VNFD includes a reference to an MCIOP. For example, an original values.yaml file in the MCIOP is shown in Table 13.

**Table 13: Original values.yaml file**

| |
|---|
| ingress1: |
| host1: service1.network.com (default value) |
| host2: service2.network.com (default value) |
| host3: service3.network.com (default value) |
| path1: 1 (default value) |
| path2: 1 (default value) |
| ingress2: |
| host4: service4.network.com (default value) |
| host5: service5.network.com (default value) |
| path3: 1 (default value) |

The VNFM updates the original values.yaml file based on the configuration information of the first virtual connection point and the second virtual connection point and the mapping information in the VNFD. An updated values.yaml file is shown in Table 14. The updated values.yaml file includes the configuration information of the first ingress container object and configuration information of a second ingress container object.

**Table 14: Updated values.yaml file**

| |
|---|
| ingress1: #configuration information of a first ingress container object |
| host1: myAMF_location.mynetwork.com |
| host2: myAMF_location_external.mynetwork.com |
| host3: myAMF_mt.mynetwork.com |
| path1: 4 |
| path2: 1 |
| ingress2: #configuration information of a second ingress container object |
| host4: myAMF_comm.mynetwork.com |
| host5:myAMF_comm_external.mynetwork.com |
| path3: 1 |

It should be noted that Table 13 and Table 14 are examples of simplified values.yaml files, and are for describing differences between the original values.yaml file and the updated values.yaml file. For a specific format of the values.yaml file, refer to conventional technologies.

**S705.** The VNFM sends the configuration information of the first ingress container object to the CISM, where the configuration information of the first ingress container object is for creating the first ingress container object.

For example, the VNFM may send an updated MCIOP to the CISM, so that the CISM creates a container object based on the MCIOP, to complete instantiation of the VNF. The updated MCIOP includes configuration information of at least one container object, and the first ingress container object is used as an example herein.

**S706.** The CISM creates the first ingress container object based on the configuration information of the first ingress container object.

Herein, the CISM may further create another container object corresponding to the VNF, to complete instantiation of the VNF.

For example, for the first ingress container object, the CISM (for example, an ingress controller in the CISM) may assign an access address (that is, an IP address) to the first ingress container object, and send the IP address of the first ingress container object to the VNFM.

According to the foregoing method, the VNFM may determine, based on configuration information of a virtual connection point (where one virtual connection point corresponds to one or more microservices) in an instantiation request sent by the NFVO, configuration information of an ingress container object corresponding to the virtual connection point, to create an ingress container object for the microservice. Because an access address (for example, an fqdn) of a service defined by using the ingress container object belongs to layer 7, an access requirement of the microservice can be met.

In addition, in this embodiment of this application, virtualCP is extended in the VNFD, to implement mapping between a network element microservice and the ingress container object, and parameters such as the container object type information, the service type information, the domain name type information, and the priority information are introduced into the VNFD to manage the ingress container object. Therefore, the network element microservice can be better reconstructed by using a cloud native technology, and a microservice-based network element can be created and life cycle management can be implemented through MANO.

Optionally, after the instantiation of the VNF is completed, the method may further include S707-S708 and/or S709-S710.

**S707.** The NFVO sends first request information to the VNFM, where the first request information is for requesting an access address of the first virtual connection point.

Herein, there may be a plurality of cases in which the NFVO is triggered to send the first request information to the VNFM. For example, the NFVO needs to view access information of the first virtual connection point of the successfully deployed VNF.

**S708.** The VNFM sends, to the NFVO based on the first request information, the access address of the first ingress container object as the access address of the first virtual connection point.

Further, the NFVO may send the access address of the first virtual connection point to the OSS/BSS, and the OSS/BSS sets, based on an IP address of the first virtual connection point (that is, virtualCp1) that is fed back, a binding relationship between the fqdn of the microservice and the IP address in a DNS server, which, for example, may be as follows:
ip1:
myAMF_location.mynetwork.com
myAMF_location_external.mynetwork.com
myAMF_mt.mynetwork.com

In this way, after obtaining an access address (that is, the fqdn) of the microservice, a visitor may query the DNS server for an IP address corresponding to the access address, and the DNS server returns the IP address assigned to the ingress to the visitor. Then, the visitor sends an HTTP request to the IP address and specifies the access address of the accessed microservice in a host header to access the microservice.

**S709.** The OSS/BSS may send second request information to the NFVO, where the second request information is for requesting resource utilization information of the first microservice in the K microservices.

**S710.** The NFVO obtains, based on the second request information, resource utilization information of at least one VDU corresponding to the first microservice, determines the resource utilization information of the first microservice based on resource utilization information of the VDU corresponding to the first microservice, and sends the resource utilization information of the first microservice to the OSS/BSS.

For example, the NFVO may obtain the VNFD of the VNF based on the second request information, where the VNFD indicates the at least one VDU corresponding to the first microservice, and may further determine, based on the VNFD, that the first microservice corresponds to the at least one VDU. For example, the VNFD includes description information of each of the at least one VDU, the description information of the VDU includes the service type information, and the service type information indicates a microservice corresponding to the VDU. For details, refer to Table 10 above.

Further, the NFVO may send an obtaining request to the VNFM, where the obtaining request is for requesting the resource utilization information of the at least one VDU corresponding to the first microservice. After receiving the obtaining request, the VNFM may obtain, from the CISM, resource utilization information of a pod corresponding to the at least one VDU, and send the resource utilization information of the pod as the resource utilization information of the VDU to the NFVO. In this way, the NFVO may determine the resource utilization information of the first microservice based on the resource utilization information of the at least one VDU.

Subsequently, after receiving the resource utilization information of the first microservice, the OSS/BSS may determine, based on the resource utilization information of the first microservice, whether an operation such as scale-out or update needs to be performed on the first microservice.

It may be understood that: (1) In the foregoing embodiment, an example in which the first instantiation request sent by the NFVO to the VNFM carries the configuration information of the virtual connection point is used for description. In another possible embodiment, the NFVO may alternatively send configuration information of a plurality of microservices to the VNFM. For example, an information element may be added to the first instantiation request to carry the configuration information of the plurality of microservices. Correspondingly, after receiving the configuration information of the plurality of microservices, the VNFM may obtain a correspondence between the virtual connection point and the microservice based on virtualCp in the VNFD, and may further determine the configuration information of the virtual connection point.

(2) The step numbers in each flowchart described in the foregoing embodiments are merely a procedure execution example, and do not constitute any limitation on a step execution sequence. In embodiments of this application, there is no strict execution sequence between steps having no time sequence dependence relationship with each other. In addition, not all steps shown in each flowchart are necessarily performed steps, and some steps may be added or deleted for each flowchart based on an actual requirement.

The foregoing describes the solutions provided in embodiments of this application, mainly from a perspective of interaction between the NFVO and the VNFM. It may be understood that, to implement the foregoing functions, the NFVO and the VNFM may include a corresponding hardware structure and/or a software module that implements each function. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation exceeds the scope of this application.

In embodiments of this application, the NFVO and the VNFM may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

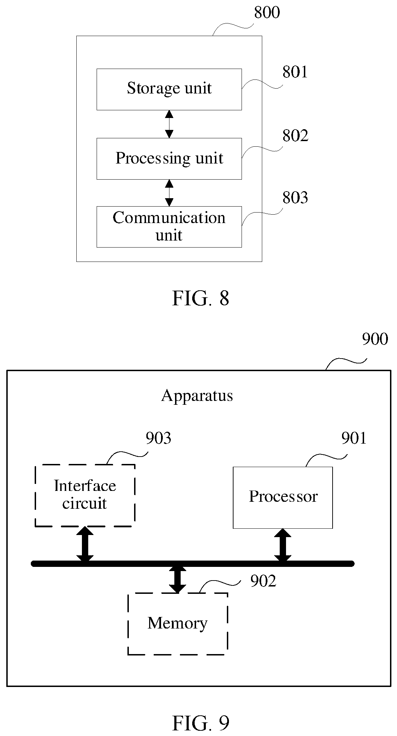

FIG. 8 is a possible example block diagram of an apparatus according to an embodiment of this application. As shown in FIG. 8, an apparatus 800 may include a processing unit 802 and a communication unit 803. The processing unit 802 is configured to control and manage an action of the apparatus 800. The communication unit 803 is configured to support communication between the apparatus 800 and another device. Optionally, the communication unit 803 is also referred to as a transceiver unit, and may include a receiving unit and/or a sending unit, respectively configured to perform a receiving operation and a sending operation. The apparatus 800 may further include a storage unit 801, configured to store program code and/or data of the apparatus 800.

### (1) Case 1

The apparatus 800 may be the VNFM in the foregoing embodiments, or may be a component (for example, a circuit or a chip) disposed in the VNFM. The processing unit 802 may support the apparatus 800 in performing actions of the VNFM in the foregoing method examples. Alternatively, the processing unit 802 mainly performs internal actions of the VNFM in the method examples, and the communication unit 803 may support communication between the apparatus 800 and another device.

For example, in an embodiment, the communication unit 803 is configured to receive a first instantiation request from an NFVO, where the first instantiation request is for requesting to instantiate the VNF, the first instantiation request includes configuration information of a first virtual connection point of the VNF, the configuration information of the first virtual connection point includes configuration information of K microservices of a network function NF corresponding to the VNF, and K is a positive integer; the processing unit 802 is configured to determine, based on the configuration information of the first virtual connection point, configuration information of a first ingress container object corresponding to the first virtual connection point, where the first ingress container object is configured to provide an access ingress of the K microservices; and the communication unit 803 is further configured to send the configuration information of the first ingress container object to a CISM, where the configuration information of the first ingress container object is for creating the first ingress container object.

In a possible design, the processing unit 802 is specifically configured to obtain a VNFD of the VNF, where the VNFD includes mapping information, and the mapping information indicates a mapping relationship between the configuration information of the first virtual connection point and the configuration information of the first ingress container object; and determine the configuration information of the first ingress container object based on the configuration information of the first virtual connection point and the mapping information.

In a possible design, the mapping information includes first mapping information corresponding to a first microservice in the K microservices; and the first mapping information includes at least one of the following: domain name mapping information, where the domain name mapping information indicates a parameter mapped to a domain name of the first microservice in configuration information of the first microservice; or priority mapping information, where the priority mapping information indicates a parameter mapped to a priority of the first microservice in configuration information of the first microservice.

In a possible design, the VNFD includes description information of the first microservice, and the first mapping information is included in the description information of the first microservice.

In a possible design, the description information of the first microservice further includes at least one of the following: service type information, where the service type information includes a name of the first microservice; domain name type information, where the domain name type information indicates a configured domain name type supported by the first microservice, and the domain name type includes an internal access domain name and/or an external access domain name; or priority information, where the priority information indicates a configured priority supported by the first microservice.

In a possible design, the VNFD further includes container object type information corresponding to the first virtual connection point, and the container object type information indicates that a container object type corresponding to the first virtual connection point is an ingress container object.

In a possible design, the VNFD further includes description information of a VDU of the VNF, the description information of the VDU includes the service type information, and the service type information indicates a microservice corresponding to the VDU.

In a possible design, the communication unit 803 is further configured to receive an access address of the first ingress container object from the CISM.

In a possible design, the communication unit 803 is further configured to: receive first request information from the NFVO, where the first request information is for requesting an access address of the first virtual connection point; and send, to the NFVO based on the first request information, the access address of the first ingress container object as the access address of the first virtual connection point.

### (2) Case 2

The apparatus 800 may be the NFVO in the foregoing embodiments, or may be a component (for example, a circuit or a chip) disposed in the NFVO. The processing unit 802 may support the apparatus 800 in performing actions of the NFVO in the foregoing method examples. Alternatively, the processing unit 802 mainly performs internal actions of the NFVO in the method examples, and the communication unit 803 may support communication between the apparatus 800 and another device.

For example, in an embodiment, the communication unit 803 is configured to receive a second instantiation request from an OSS/BSS, where the second instantiation request is for requesting to instantiate the VNF, and the second instantiation request includes configuration information of M microservices of an NF corresponding to the VNF; the processing unit 802 is configured to obtain, based on configuration information of K microservices corresponding to a first virtual connection point of the VNF, configuration information of the first virtual connection point, where the K microservices belong to the M microservices, M and K are positive integers, and K is less than or equal to M; and the communication unit 803 is further configured to send a first instantiation request to a VNFM, where the first instantiation request includes the configuration information of the first virtual connection point, the configuration information of the first virtual connection point is for determining configuration information of a first ingress container object corresponding to the first virtual connection point, and the first ingress container object is configured to provide an access ingress of the K microservices.

In a possible design, the processing unit 802 is further configured to obtain a VNFD of the VNF, where the VNFD includes description information of the first virtual connection point, and the description information of the first virtual connection point indicates that the first virtual connection point corresponds to the K microservices.

In a possible design, the description information of the first virtual connection point includes names of the K microservices.

In a possible design, the communication unit 803 is further configured to receive second request information from the OSS/BSS, where the second request information is for requesting resource utilization information of a first microservice in the K microservices; the processing unit 802 is further configured to: obtain, based on the second request information, resource utilization information of at least one VDU corresponding to the first microservice; and determine the resource utilization information of the first microservice based on the resource utilization information of the VDU corresponding to the first microservice; and the communication unit 803 is further configured to send the resource utilization information of the first microservice to the OSS/BSS.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form of software invoked by a processing element.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in the manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

FIG. 9 is a diagram of a structure of an apparatus according to an embodiment of this application. The apparatus is configured to implement an operation of the VNFM or the NFVO in the foregoing embodiments.

As shown in FIG. 9, an apparatus 900 may include a processor 901, a memory 902, and an interface circuit 903. The processor 901 may be configured to: process a communication protocol and communication data, and control the communication apparatus 900. The memory 902 may be configured to store a program and data, and the processor 901 may perform, based on the program, methods performed by the AP in embodiments of this application. The interface circuit 903 may be used by the communication apparatus 900 to communicate with another device. The communication may be wired communication or wireless communication. The interface circuit may also be replaced with a transceiver.

Alternatively, the memory 902 may be externally connected to the apparatus 900. In this case, the apparatus 900 may include the interface circuit 903 and the processor 901. Alternatively, the interface circuit 903 may be externally connected to the apparatus 900. In this case, the apparatus 900 may include the memory 902 and the processor 901. When both the interface circuit 903 and the memory 902 are externally connected to the apparatus 900, the apparatus 900 may include the processor 901.

The apparatus shown in FIG. 9 can implement processes related to the VNFM or the NFVO in the foregoing method embodiments. Operations and/or functions of modules in the apparatus shown in FIG. 9 are separately used to implement corresponding procedures in the foregoing method embodiments. For details, refer to the descriptions in the foregoing method embodiments. To avoid repetition, detailed descriptions are properly omitted herein.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a magnetic disk memory, an optical memory, and the like) that include computer-usable program code.

This application is described with reference to the flowcharts and/or block diagrams of the method, the device (system), and the computer program product according to this application. It should be understood that computer program instructions can implement each procedure and/or block in the flowcharts and/or block diagrams and a combination of procedures and/or blocks in the flowcharts and/or block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, and therefore computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. In this case, if the modifications and variations made to this application fall within the scope of the claims of this application and their equivalent technologies, this application is intended to include these modifications and variations.

## Claims

1. An instantiation method for a virtualised network function VNF, wherein the method comprises:
receiving a first instantiation request from a network functions virtualisation orchestrator NFVO, wherein the first instantiation request is for requesting to instantiate the VNF, the first instantiation request comprises configuration information of a first virtual connection point of the VNF, the configuration information of the first virtual connection point comprises configuration information of K microservices of a network function NF corresponding to the VNF, and K is a positive integer;
determining, based on the configuration information of the first virtual connection point, configuration information of a first ingress container object corresponding to the first virtual connection point, wherein the first ingress container object is configured to provide an access ingress of the K microservices; and
sending the configuration information of the first ingress container object to container infrastructure service management CISM, wherein the configuration information of the first ingress container object is for creating the first ingress container object.

2. The method according to claim 1, wherein the determining, based on the configuration information of the first virtual connection point, configuration information of a first ingress container object corresponding to the first virtual connection point comprises:
obtaining a virtualised network function descriptor VNFD of the VNF, wherein the VNFD comprises mapping information, and the mapping information indicates a mapping relationship between the configuration information of the first virtual connection point and the configuration information of the first ingress container object; and
determining the configuration information of the first ingress container object based on the configuration information of the first virtual connection point and the mapping information.

3. The method according to claim 2, wherein the mapping information comprises first mapping information corresponding to a first microservice in the K microservices; and
the first mapping information comprises at least one of the following:
domain name mapping information, wherein the domain name mapping information indicates a parameter mapped to a domain name of the first microservice in configuration information of the first microservice; or
priority mapping information, wherein the priority mapping information indicates a parameter mapped to a priority of the first microservice in configuration information of the first microservice.

4. The method according to claim 3, wherein the VNFD comprises description information of the first microservice, and the first mapping information is comprised in the description information of the first microservice.

5. The method according to claim 4, wherein the description information of the first microservice further comprises at least one of the following:
service type information, wherein the service type information comprises a name of the first microservice;
domain name type information, wherein the domain name type information indicates a configured domain name type supported by the first microservice, and the domain name type comprises an internal access domain name and/or an external access domain name; or
priority information, wherein the priority information indicates a configured priority supported by the first microservice.

6. The method according to any one of claims 2 to 5, wherein the VNFD further comprises container object type information corresponding to the first virtual connection point, and the container object type information indicates that a container object type corresponding to the first virtual connection point is an ingress container object.

7. The method according to any one of claims 2 to 6, wherein the VNFD further comprises description information of a virtualisation deployment unit VDU of the VNF, the description information of the VDU comprises the service type information, and the service type information indicates a microservice corresponding to the VDU.

8. The method according to any one of claims 1 to 7, wherein the method further comprises:
receiving an access address of the first ingress container object from the CISM.

9. The method according to claim 8, wherein the method further comprises:
receiving first request information from the NFVO, wherein the first request information is for requesting an access address of the first virtual connection point; and
sending, to the NFVO based on the first request information, the access address of the first ingress container object as the access address of the first virtual connection point.

10. An instantiation method for a VNF, wherein the method comprises:
receiving a second instantiation request from an operation support system/business support system OSS/BSS, wherein the second instantiation request is for requesting to instantiate the VNF, and the second instantiation request comprises configuration information of M microservices of an NF corresponding to the VNF;
obtaining, based on configuration information of K microservices corresponding to a first virtual connection point of the VNF, configuration information of the first virtual connection point, wherein the K microservices belong to the M microservices, M and K are positive integers, and K is less than or equal to M; and
sending a first instantiation request to a VNFM, wherein the first instantiation request comprises the configuration information of the first virtual connection point, the configuration information of the first virtual connection point is for determining configuration information of a first ingress container object corresponding to the first virtual connection point, and the first ingress container object is configured to provide an access ingress of the K microservices.

11. The method according to claim 10, wherein the method further comprises:
obtaining a VNFD of the VNF, wherein the VNFD comprises description information of the first virtual connection point, and the description information of the first virtual connection point indicates that the first virtual connection point corresponds to the K microservices.

12. The method according to claim 11, wherein the description information of the first virtual connection point comprises names of the K microservices.

13. The method according to any one of claims 10 to 12, wherein the method further comprises:
receiving second request information from the OSS/BSS, wherein the second request information is for requesting resource utilization information of a first microservice in the K microservices;
obtaining, based on the second request information, resource utilization information of at least one VDU corresponding to the first microservice;
determining the resource utilization information of the first microservice based on the resource utilization information of the VDU corresponding to the first microservice; and
sending the resource utilization information of the first microservice to the OSS/BSS.

14. The method according to claim 13, wherein the method further comprises:
obtaining the VNFD of the VNF, wherein the VNFD comprises description information of each of the at least one VDU, the description information of the VDU comprises service type information, and the service type information indicates that a microservice corresponding to the VDU is the first microservice.

15. An instantiation apparatus for a VNF, wherein the apparatus comprises a communication unit and a processing unit;
the communication unit is configured to receive a first instantiation request from an NFVO, wherein the first instantiation request is for requesting to instantiate the VNF, the first instantiation request comprises configuration information of a first virtual connection point of the VNF, the configuration information of the first virtual connection point comprises configuration information of K microservices of a network function NF corresponding to the VNF, and K is a positive integer;
the processing unit is configured to determine, based on the configuration information of the first virtual connection point, configuration information of a first ingress container object corresponding to the first virtual connection point, wherein the first ingress container object is configured to provide an access ingress of the K microservices; and
the communication unit is further configured to send the configuration information of the first ingress container object to a CISM, wherein the configuration information of the first ingress container object is for creating the first ingress container object.

16. The apparatus according to claim 15, wherein the processing unit is specifically configured to:
obtain a VNFD of the VNF, wherein the VNFD comprises mapping information, and the mapping information indicates a mapping relationship between the configuration information of the first virtual connection point and the configuration information of the first ingress container object; and
determine the configuration information of the first ingress container object based on the configuration information of the first virtual connection point and the mapping information.

17. The apparatus according to claim 16, wherein the mapping information comprises first mapping information corresponding to a first microservice in the K microservices; and
the first mapping information comprises at least one of the following:
domain name mapping information, wherein the domain name mapping information indicates a parameter mapped to a domain name of the first microservice in configuration information of the first microservice; or
priority mapping information, wherein the priority mapping information indicates a parameter mapped to a priority of the first microservice in configuration information of the first microservice.

18. The apparatus according to claim 17, wherein the VNFD comprises description information of the first microservice, and the first mapping information is comprised in the description information of the first microservice.

19. The apparatus according to claim 18, wherein the description information of the first microservice further comprises at least one of the following:
service type information, wherein the service type information comprises a name of the first microservice;
domain name type information, wherein the domain name type information indicates a configured domain name type supported by the first microservice, and the domain name type comprises an internal access domain name and/or an external access domain name; or
priority information, wherein the priority information indicates a configured priority supported by the first microservice.

20. The apparatus according to any one of claims 16 to 19, wherein the VNFD further comprises container object type information corresponding to the first virtual connection point, and the container object type information indicates that a container object type corresponding to the first virtual connection point is an ingress container object.

21. The apparatus according to any one of claims 16 to 20, wherein the VNFD further comprises description information of a VDU of the VNF, the description information of the VDU comprises the service type information, and the service type information indicates a microservice corresponding to the VDU.

22. The apparatus according to any one of claims 15 to 21, wherein the communication unit is further configured to:
receive an access address of the first ingress container object from the CISM.

23. The apparatus according to claim 22, wherein the communication unit is further configured to:
receive first request information from the NFVO, wherein the first request information is for requesting an access address of the first virtual connection point; and
send, to the NFVO based on the first request information, the access address of the first ingress container object as the access address of the first virtual connection point.

24. An instantiation apparatus for a VNF, wherein the apparatus comprises a communication unit and a processing unit;
the communication unit is configured to receive a second instantiation request from an OSS/BSS, wherein the second instantiation request is for requesting to instantiate the VNF, and the second instantiation request comprises configuration information of M microservices of an NF corresponding to the VNF;
the processing unit is configured to obtain, based on configuration information of K microservices corresponding to a first virtual connection point of the VNF, configuration information of the first virtual connection point, wherein the K microservices belong to the M microservices, M and K are positive integers, and K is less than or equal to M; and
the communication unit is further configured to send a first instantiation request to a VNFM, wherein the first instantiation request comprises the configuration information of the first virtual connection point, the configuration information of the first virtual connection point is for determining configuration information of a first ingress container object corresponding to the first virtual connection point, and the first ingress container object is configured to provide an access ingress of the K microservices.

25. The apparatus according to claim 24, wherein the processing unit is further configured to:
obtain a VNFD of the VNF, wherein the VNFD comprises description information of the first virtual connection point, and the description information of the first virtual connection point indicates that the first virtual connection point corresponds to the K microservices.

26. The apparatus according to claim 25, wherein the description information of the first virtual connection point comprises names of the K microservices.

27. The apparatus according to any one of claims 24 to 26, wherein the communication unit is further configured to receive second request information from the OSS/BSS, wherein the second request information is for requesting resource utilization information of a first microservice in the K microservices;
the processing unit is further configured to: obtain, based on the second request information, resource utilization information of at least one VDU corresponding to the first microservice; and determine the resource utilization information of the first microservice based on the resource utilization information of the VDU corresponding to the first microservice; and
the communication unit is further configured to send the resource utilization information of the first microservice to the OSS/BSS.

28. The apparatus according to claim 27, wherein the processing unit is further configured to
obtain the VNFD of the VNF, wherein the VNFD comprises description information of each of the at least one VDU, the description information of the VDU comprises service type information, and the service type information indicates that a microservice corresponding to the VDU is the first microservice.

29. An instantiation method for a VNF, wherein the method comprises:
receiving, by an NFVO, a second instantiation request from an OSS/BSS, wherein the second instantiation request is for requesting to instantiate the VNF, and the second instantiation request comprises configuration information of M microservices of an NF corresponding to the VNF, and obtaining, by the NFVO, based on configuration information of K microservices corresponding to a first virtual connection point of the VNF, configuration information of the first virtual connection point and sending a first instantiation request to a VNFM, wherein the first instantiation request comprises the configuration information of the first virtual connection point, the K microservices belong to the M microservices, M and K are positive integers, and K is less than or equal to M; and
receiving, by the VNFM, the first instantiation request from the NFVO, determining, based on the configuration information of the first virtual connection point, configuration information of a first ingress container object corresponding to the first virtual connection point, wherein the first ingress container object is configured to provide an access ingress of the K microservices, and sending the configuration information of the first ingress container object to a container infrastructure service management CISM, wherein the configuration information of the first ingress container object is for creating the first ingress container object.

30. An instantiation system for a VNF, comprising:
a VNFM, configured to implement the method according to any one of claims 1 to 9; and
an NFVO, configured to implement the method according to any one of claims 10 to 14.

31. A computer-readable storage medium, wherein the computer-readable storage medium stores a computer program, and when the computer program is run on a computer, the computer is enabled to perform the method according to any one of claims 1 to 14.

32. A chip, wherein the chip is coupled to a memory, and the chip reads a computer program stored in the memory, to perform the method according to any one of claims 1 to 14.
